# EUROPEAN PATENT APPLICATION

(11) **EP 2 669 509 A1**
(43) Date of publication of application: **04.12.2013**
(21) Application number: 12169793.2
(22) Date of filing: 29.05.2012
(51) Int. Cl.: F03D 7/02, F03D 1/06

(54) **Actuator element**

(71) Applicant: SE Blades Technology B.V., 7559 ST Hengelo (NL)
(72) Inventor: Bersee, Harald, 2211AZ Noordwijkerhout (NL); Wiwattananon, Peerawan, Bangkok, 10510 (TH)

(57) **Abstract**

The invention is related to an actuator element (10) for an actuator (100) for the rotor blade (200) of a wind turbine (300), with at least two length variable piezoelectric elements (20) being at least partly embedded in an actuator structure (30) of composite material, whereby the at least two piezoelectric elements (20) are located in a relation to each other for accumulation of their length variation.

## Description

The present invention is related to an actuator element for an actuator for the rotor blade of a wind turbine, an actuator for the rotor blade of a wind turbine as well as a rotor blade for a wind turbine.

It is known to use actuators for rotor blades of a wind turbine. For example, actuators are used to vary the pitch of the rotor blades of the wind turbine. To vary the pitch, electric motors are known as a common mean to actuate the rotor blades. However, mostly they are too heavy and/or too bulky to be located inside the rotor blade in order to actuate the active flow control components especially flaps. The flow control components such as flaps are used to control the aerodynamic flow quality around the rotor blades in order to reduce the flow separation or turbulence. Moreover, such electric motors are very cost intensive. It is also known that piezoelectric elements are capable to be used in a small actuation range and to create small force, while large frequency bandwidth is the advantage of the piezoelectric material. Therefore, the commonly known piezoelectric elements are not capable to actuate neither the flow control component nor any other kind of the components in the rotor blade of the wind turbine. Moreover, such commonly known piezoelectric elements are not capable to resist the aerodynamic force due to the pressure variation and wind gust around the wind turbine.

It is an object of the present invention to solve the problems mentioned above. In particular, it is an object of the present invention to provide an actuator element for an actuator for the rotor blade of a wind turbine, an actuator for the rotor blade of a wind turbine as well as a rotor blade of a wind turbine, which are configured for actuation of flow components in particular a flap of the rotor in an easy and cost efficient manner.

Aforesaid problems are solved with an actuator element according to independent claim 1, an actuator according to independent claim 7 as well as a rotor blade according to independent claim 14. Features and details of the invention can be found in the subclaims, the description as well as the drawings. Features and details discussed in relation to the inventive actuator element are also to be seen in relation with the actuator as well as with the rotor blade.

According to the present invention, an actuator element for an actuator for the rotor blade of a wind turbine comprises at least two length variable piezoelectric elements. These two piezoelectric elements are at least partly embedded in an actuator structure of composite material. Thereby, the at least two piezoelectric elements are located in a relation to each other for accumulation of their length variation. Under the term "composite material" within the present invention a material of the actuator structure comprises at least two different materials. In particular the composite material is a laminated material, for example glass fiber-based material or carbon fiber-based material or different kinds of fibers. Moreover, a matrix material for example an epoxy resin or different kinds of resin can be used to reinforce the fibers such as glass fibers or carbon fibers. In particular, each of the at least two piezoelectric elements is fully embedded within the actuator structure.

The construction of an actuator element according to the present invention provides the possibility to use small piezoelectric elements in a rough environment such as a wind turbine, in particular the rotor blade. Each piezoelectric element is covered at least partly by the actuator structure and therefore is protected from the rough and harsh environment around the rotor blade. Moreover, the use of at least two piezoelectric elements increases the possibility of length variation and moreover, the force capability. The aforesaid object can be achieved by the inventive location of the at least two piezoelectric elements relative to each other. The accumulation of the length variation of the at least two piezoelectric elements has to be understood such that if, for example, one piezoelectric element has a possible length variation of about 0.1 mm, both piezoelectric elements have an accumulated possibility for length variation of at least 0.2mm.

It has to be noted, that the geometrical form of the actuator element can be adapted to the respective use at the rotor blade of the wind turbine. In particular, in general flat geometrical dimensions for the actuator element can be provided. Moreover, also a curved construction of the geometrical dimension of the actuator element is possible according to the present invention. Based on the geometrical form of the actuator element, the direction of the length variation as well as the direction of the created force of the piezoelectric elements can be influenced. According to the present invention, a geometrical curved shape of the actuator element is obtained and this influences the actuation displacement as well as the force capability of the actuator element.

The piezoelectric elements comprise piezoelectric material, for example piezocrystals or piezoceramics or different substance composition of piezoelectric materials (in particular oriented piezoceramics). As aforementioned, the piezoelectric elements are capable of actuating in a large frequency bandwidth. Therefore, in comparison to the commonly known electric motors for the pitch variation of the rotor blade, an inventive actuator can be actuated in a greater actuation frequency bandwidth as well as with high accuracy.

The piezoelectric elements, when manufactured according to the present invention, out of plane, longitudinal and torsion effects can be achieved. The actuator structure comprises at least partly a material which is in particular electrical insulating such that the piezoelectric elements are covered by an insulating material. Moreover, within the actuator structure, advantageously electrical connectors are embedded in the composite materials and have a direct contact to the piezoelectric elements to supply each piezoelectric element with electrical power.

The actuator element is in particular adapted to a later use in a rotor blade of a wind turbine. For example, the overall geometrical dimensions are in general about 200mm in length and about 30mm in wide.

The at least two piezoelectric elements can for example be identical or at least identical piezoelectric elements. Moreover, the geometrical dimensions of the at least two piezoelectric elements are advantageously identical or at least identical to each other.

An actuator element according to the present invention can be characterized such that the at least two piezoelectric elements are located within a common layer inside the composite material of the actuator structure as well as the locations can be varied along the actuator thickness. Each composite material lamination layer can be located on top of each other, while between the two distinguished layers, all of the at least two piezoelectric elements are located in the inventive manner. This leads to a symmetric in actuation as well as the out of plane actuation displacement can be optimized. Having two piezoelectric elements manufactured at the same time, a reduction of cost and time can be achieved. The lamination process is completed through the curing process to cure the composite laminate. In addition, different kinds of lamination such as the use of the adhesive materials are also possible in the scope of the present invention.

It is further possible that, according to the present invention, the at least two piezoelectric elements of an inventive actuator element comprise at least partly a piezoceramic material. The use of piezoceramic material in particular for two or more piezoelectric elements reduces the manufacturing costs and moreover increases the possibility of resistance against the environment of the rotor blade of a wind turbine. Moreover, the at least two piezoelectric elements are equal or similar as to their material and as to their location within the actuator structure.

Moreover, it is possible that according to the present invention the actuator element is configured for creating a force by the length variation of the at least two piezoelectric elements over about 0.05N, in particular over about 0.1 N, more particular up to about 0.3N. The use of the at least two piezoelectric elements allows such high forces in relation to commonly known piezoelectric materials. Moreover, the location within the possibility of the accumulation of the length variation allows the increase of the created force.

It is also possible according to the present invention that between the at least two piezoelectric elements a piezofree zone is located. The piezofree zone is intended for the constructive elements of the rotor blade to connect such that the at least two piezoelectric elements are not in a direct contact with the constructive elements. This is to protect the piezoelectric elements from resisting the direct force. Moreover, the piezofree zone is flatter than the piezoelectric systems zones. Such a constructive element could for example be a flow component, in particular the flap of a rotor blade. This leads to the possibility that an interface is created by that piezofree zone which is not deformed by the use of the piezoelectric elements. Therefore, a steady and rigid interface is provided for connectability to the flap, the flow component or the constructive element of the rotor blade, respectively. For example the piezofree zone is located in the middle of the actuator element and therefore a symmetrical arrangement of all piezoelectric elements with respect to the piezofree zone can be achieved.

Moreover, it is possible that according to the present invention the actuator element is configured for creating a displacement in at least one direction by the length variation of the at least two piezoelectric elements over about 1 mm, in particular over about 1.5mm, more particular between about 1.6mm and about 1.9mm. This relatively high numbers of length variation can only be achieved by the inventive way of the combination and inventive location of at least two piezoelectric elements.

Moreover, one part of the present invention is an actuator for the rotor blade of a wind turbine, comprising at least one actuator element with at least two length variable piezoelectric elements being at least partly embedded in an actuator structure of composite material. Thereby, the at least two piezoelectric elements are located in a relation to each other for accumulation of their length variation. In particular, the actuator is configured with an actuator element, comprising the features of the present invention. Therefore, an inventive actuator comprises the same advantages which have discussed in detail as to the inventive actuator element.

An inventive actuator can be configured such that at least two actuator elements are arranged in series to each other for an accumulation of displacement effected by the length variation of piezoelectric elements. The combination of more than one, namely at least two actuator elements leads to infinitesimal possibility of increasing the length variation of the overall actuator. Therefore, the actuator element can be seen as the single piece of a matrix of multiple actuating elements forming the inventive actuator.

As discussed in aforesaid part of the description as to the accumulation of displacement, it is also possible that the at least two actuator elements are arranged in parallel to each other to allow the accumulation of force effected by the length variation of the piezoelectric elements. Of course, also a combination of an arrangement in series and an arrangement in parallel is possible such that the force as well as the displacement can be accumulated. It has to be noted that the influence on the increase of force and the influence on the increase of displacement is separate from each other and therefore a very efficient way of adapting an inventive actuator to the needs of the use at the rotor blade is given.

Moreover, it is possible that an inventive actuator with at least two actuator elements comprises at least one rigid connector to connect the at least two actuator elements. This allows the transfer of displacement and/or the transfer of force between the different actuator elements. In particular, the rigid connector is spaced apart from the interface zone to a constructive element of the rotor, namely in particular the piezofree zone. It is further of advantage, if the rigid connector is located at one or at all of the ends of the actuator elements, which are also piezofree zones.

It is also possible to attach the piezofree zone, which is located in the middle of the actuator element, in order to transfer displacement and/or force between different set of an actuator element pair connected in series. Note that the rigid connector mentioned above is intended to transfer displacement and/or force between two actuator elements in an actuator element pair.

Moreover, it is possible, that according to the present invention that the actuator is characterized such that the at least one rigid connector comprises at least one spring element. Moreover, it is possible to use any other kinds of stiff element instead of a springlike element. The use of the spring element gives the opportunity to introduce a spring biasing force. Moreover, it is possible to use elastic material to offer the spring element.

It is also possible that according to the present invention at least one rigid connector is arranged at each end of an actuator element. In particular, symmetrical arrangement of all rigid connectors is comprised by an inventive actuator. This leads to the possibility of symmetrical displacement as well as to symmetrical creation of force.

Further object of the present invention is a rotor blade of a wind turbine, comprising at least one flow component to be actuated by at least one actuator according to the present invention. Therefore, an inventive rotor blade comprises the same advantages, which have been discussed in detail with respect to an inventive actuator.

An inventive rotor blade can be configured such that the flow component is a flap, in particular arranged at the trailing edge of the rotor blade. Therefore, very easy and cheap actuators can be used to change the angle of the flap in relation to the rotor blade. Moreover, no movement of the actuator itself, for example in comparison to an electric motor, has to be used. The control mechanism for the actuator itself is simplified by the use of the piezoelectric elements according to the present invention.

The present invention is described in more detail, with respect to the accompanying drawings. The drawings show schematically:
- Figure 1: a cross section of a first embodiment of an actuator element,
- Figure 2: a cross section of a further embodiment of an inventive actuator element,
- Figure 3: a first embodiment of an inventive actuator,
- Figure 4: a further embodiment of an inventive actuator,
- Figure 5: a further embodiment of an inventive actuator and
- Figure 6: one example of rotor blades according to the present invention.

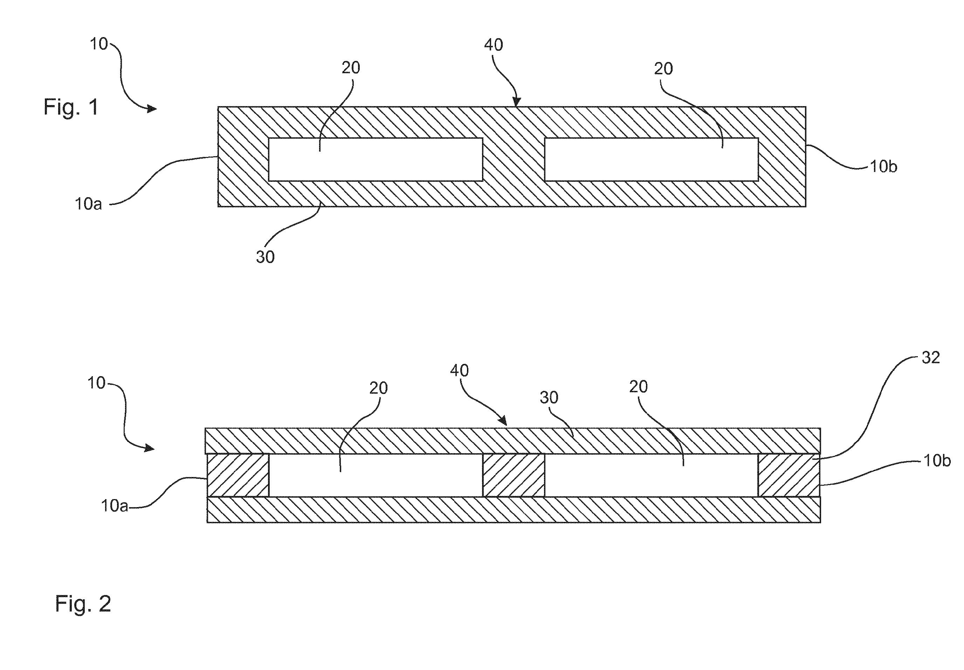

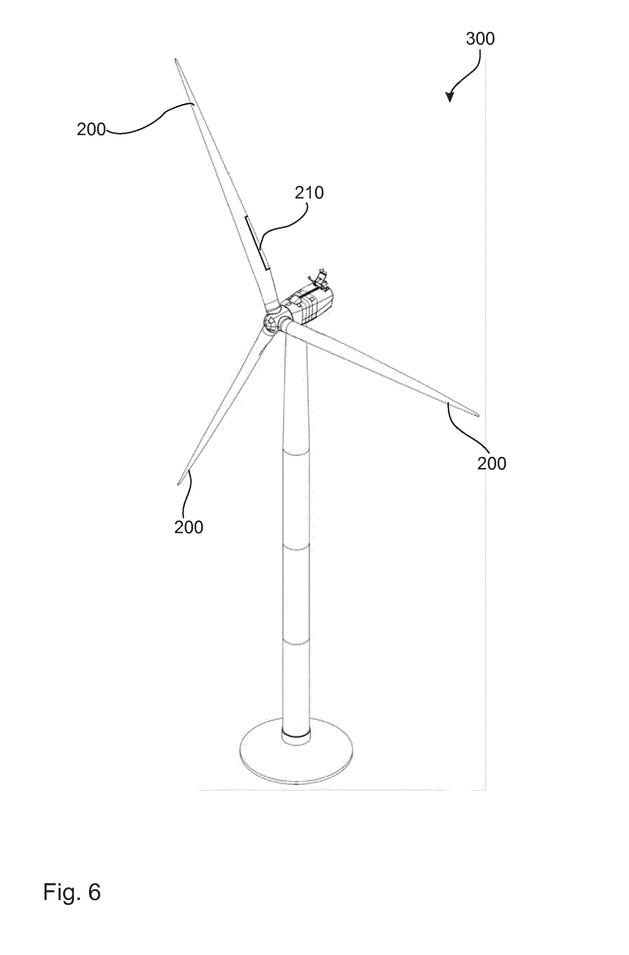

In figure 1 a first embodiment of an inventive actuator element 10 is depicted in a cross sectional view. The actuator element 10 comprises an actuator structure 30 of composite material. Within that composite material of the actuator structure 30 two piezoelectric elements 20 are located within one single layer. Between the two piezoelectric elements 20 a piezofree zone 40 can be seen. This piezofree zone 40 can be used to be an interface to other parts of the rotor blade 200, in particular for a flap 210, which can be seen for example in figure 6.

Figure 2 shows a further embodiment of an inventive actuator element 10. It is different to the embodiment of figure 1 by the use of different layers, which are connected to each other by adhesive. The actuator structure 30 therefore comprises different layers of composite material, which are adhered to each other. In figure 1, the actuator structure composes of fibers such as glass fibers or carbon fibers or any other kinds of fibers and a matrix material such as epoxy resin or different kinds of resin for reinforcement purposes.

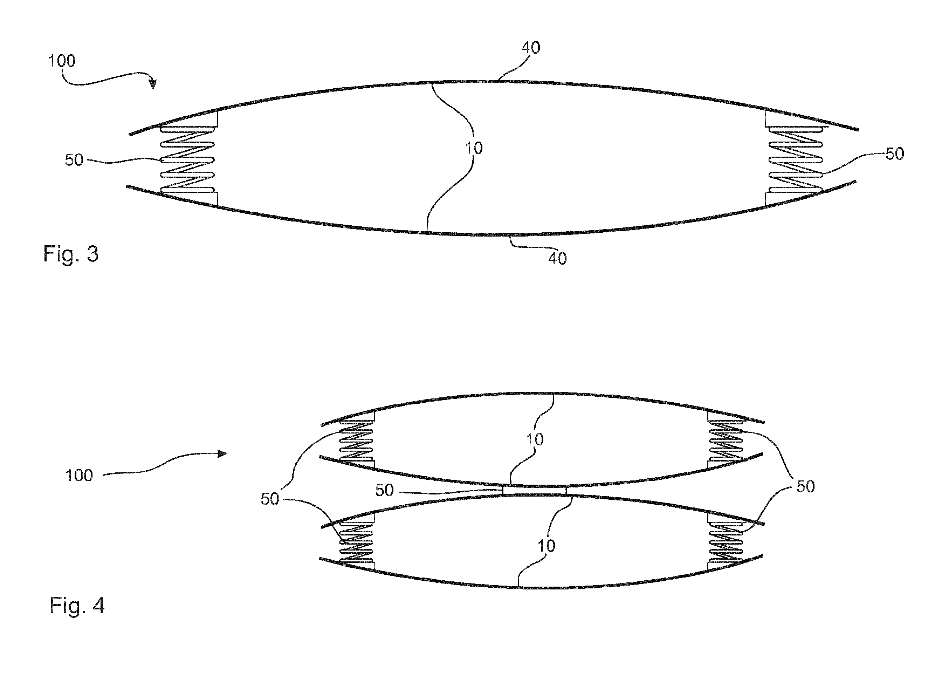

In figures 3, 4 and 5 different kinds of embodiments for the actuator 100 are shown. All of these actuators 100 comprise at least two actuator elements 10, which are for example configured as depicted in figures 1 or 2.

Figure 3 shows the arrangement of two actuator elements 10 in series to each other. They are connected by rigid connectors 50 comprising spring elements. The use of such serial connection leads to the possibility of accumulation of length variation, such that higher displacement rate can be achieved. To increase the displacement even further, the embodiment of figure 4 of the actuator 100 comprises a connection of four actuator elements 10 in series, all combined to each other with rigid connectors 50.

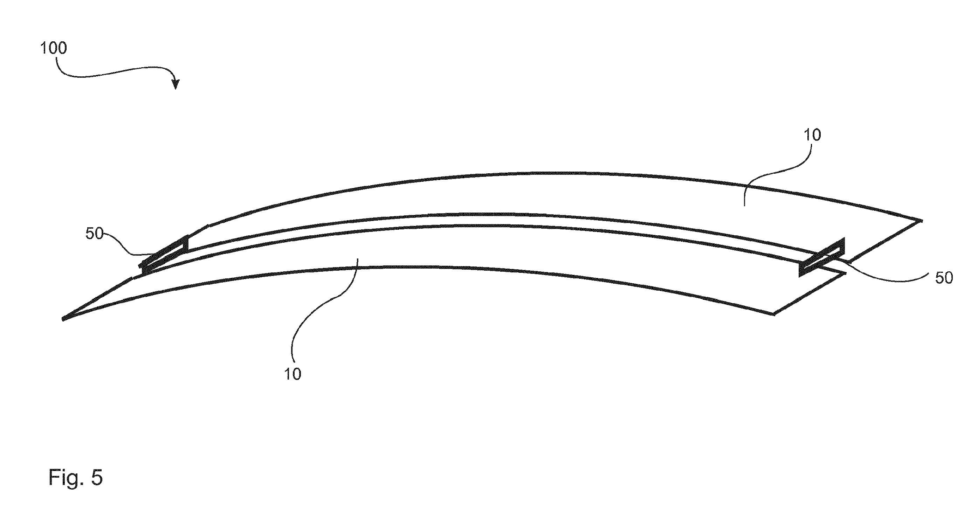

To increase the force in the accumulation manner, the actuator 100 (comprising two actuator elements 10 as shown in figure 3) are connected in a parallel manner via a rigid connector 50. Once all actuator element pairs move simultaneously, large force can be produced. A combination of the embodiments of figures 3 and 4 to make up an embodiment of figure 5 is possible (simultaneous series and parallel configurations). This is to increase both displacement and force produced simultaneously.

Figure 6 shows one possibility of a wind turbine 300 with a rotor with three rotor blades 200. At the upper left rotor blade 200, a flow component 210 in form of a flap 210 can be seen. The use of the inventive actuator elements 10 and actuators 100 respectively allows the possibility to actuate such flap 210 without the effort of placing electric motors in the rotor blade 200.

Aforesaid description of the embodiments of the present invention is only by the way of example. Therefore, the features described as to each embodiment can be combined with other embodiments as well, if of technical sense, without leaving the scope of the present invention.

### Reference signs

- 10: actuator element
- 10a: first end
- 10b: second end
- 20: piezoelectric element
- 30: actuator structure
- 32: layer
- 40: piezofree zone
- 50: rigid connector

- 100: actuator
- 200: rotor blade
- 210: flap
- 300: wind turbine

## Claims

1. Actuator element (10) for an actuator (100) for the rotor blade (200) of a wind turbine (300), with at least two length variable piezoelectric elements (20) being at least partly embedded in an actuator structure (30) of composite material, whereby the at least two piezoelectric elements (20) are located in a relation to each other for accumulation of their length variation.

2. Actuator element (10) according to claim 1, **characterized in that** the at least two piezoelectric elements (20) are located within a common layer (32) inside of the composite material of the actuator structure (30).

3. Actuator element (10) according to any of the preceding claims, **characterized in that** the at least two piezoelectric elements (20) comprise at least partly a piezoceramic material.

4. Actuator element (10) according to any of the preceding claims, **characterized in that** it is configured for creating a force by the length variation of the at least two piezoelectric elements (20) over about 0.05N in particular over about 0.1 N, more particular up to about 0.2N.

5. Actuator element (10) according to any of the preceding claims, **characterized in that** between the at least two piezoelectric elements (20) a piezofree zone (40) is located, in particular for being connected with a constructive element (210) of the rotor blade (200).

6. Actuator element (10) according to any of the preceding claims, **characterized in that** it is configured for creating a displacement in at least one direction by the length variation of the at least two piezoelectric elements (20) over about 1 mm, in particular over about 1.5mm, more particular between about 1.6mm and 1.9mm.

7. Actuator (100) for the rotor blade (200) of a wind turbine (300), comprising at least one actuator element (10) with at least two length variable piezoelectric elements (20) being at least partly embedded in an actuator structure (30) of composite material, whereby the at least two piezoelectric elements (20) are located in a relation to each other for accumulation of their length variation.

8. Actuator (100) according to claim 7, **characterized in that** that the at least one actuator element (10) comprises the features of at least one of claims 1 to 6.

9. Actuator (100) according to any of claims 7 to 8, **characterized in that** at least two actuator elements (10) are arranged in series to each other for an accumulation of displacement effected by the length variation of the piezoelectric elements (20).

10. Actuator (100) according to any of claims 7 to 9, **characterized in that** at least two actuator elements (10) are arranged in parallel to each other for an accumulation of force effected by the length variation of the piezoelectric elements (20).

11. Actuator (100) according to any of claims 9 to 10, **characterized in that** the at least two actuator elements (10) are connected with each other by at least one rigid connector (50).

12. Actuator (100) according to claim 11, **characterized in that** the at least one rigid connector (50) comprises at least one spring element.

13. Actuator (100) according to any of claims 11 to 12, **characterized in that** at least one rigid connector (50) is arranged at each end (10a, 10b) of an actuator element (10).

14. Rotor blade (200) of a wind turbine (300), comprising at least one flow component (210) to be actuated by at least one actuator (100) with the features of one of claims 7 to 13.

15. Rotor blade (200) according to claim 14, **characterized in that** the flow component (210) is a flap, in particular arranged at the trailing edge of the rotor blade (200).
